# EUROPÄISCHE PATENTSCHRIFT

(11) **EP 3 974 572 B1**
(45) Veröffentlichungstag und Bekanntmachung des Hinweises auf die Patenterteilung: **22.05.2024**
(21) Anmeldenummer: 20198431.7
(22) Anmeldetag: 25.09.2020
(51) Int. Cl.: D04H 3/14, B32B 5/02, B32B 5/26, B32B 7/14, B32B 27/12, D04H 3/147

(54) **VERFAHREN ZUR HERSTELLUNG EINES VLIESAGGREGATES UND VLIESAGGREGAT**
NON-WOVEN ITEM AND METHOD FOR PRODUCING A NON-WOVEN ITEM AND
PROCÉDÉ DE FABRICATION D'UN AGRÉGAT NON TISSÉ ET AGRÉGAT NON TISSÉ

(43) Veröffentlichungstag der Anmeldung: 30.03.2022
(73) Patentinhaber: Reifenhäuser GmbH & Co. KG Maschinenfabrik, 53844 Troisdorf (DE)
(72) Erfinder: BOHL, Patrick, 53773 Hennef (DE); KRETSCHMANN, Tristan, 50825 Köln (DE); SOMMER, Sebastian, 53844 Troisdorf (DE); WAGNER, Tobias, 50823 Köln (DE)
(74) Vertreter: Andrejewski - Honke Patent- und Rechtsanwälte Partnerschaft mbB

(56) Entgegenhaltungen:
- EP-A1- 1 277 868
- EP-A1- 3 045 311
- US-A- 6 057 024
- US-A1- 2003 065 297
- US-A1- 2006 148 357

## Beschreibung

Die Erfindung betrifft ein Verfahren zur Herstellung eines Vliesaggregates, wobei zumindest ein Spunbond-Vlies als Spunbond-Basislage erzeugt wird und wobei zumindest ein elastomerer Polymer auf eine Seite, insbesondere die Oberseite der Spunbond-Basislage aufgebracht wird. Die Erfindung betrifft weiterhin ein entsprechendes Vliesaggregat. - Spunbond-Vliese werden mit Spunbond-Vorrichtungen aus Endlosfilamenten erzeugt. Endlosfilamente unterscheiden sich aufgrund ihrer quasi endlosen Länge von Kurzfasern bzw. Stapelfasern, die viel geringere Längen von beispielsweise 10 mm bis 60 mm aufweisen. Bei den im Rahmen der Erfindung für das Spunbond-Vlies bzw. für die Spunbond-Vliese eingesetzten Endlosfilamenten handelt es sich insbesondere um Endlosfilamente aus thermoplastischen Kunststoff.

Verfahren der vorstehend beschriebenen Art sind aus der Praxis bzw. aus dem Stand der Technik in unterschiedlichen Varianten bekannt. US 2006/148357 A1 beschreibt ein elastisches Vlieslaminat und ein Verfahren zur Herstellung eines solchen Laminates. Das Laminat weist eine Vlieslage und mehrere auf diese Vlieslage aufgetragene elastische Stränge auf. EP 3 045 311 A1 offenbart ein dehnbares Material mit einer Elastomerschicht und einer Vliesstoffschicht. Dabei ist es insbesondere bereits bekannt einen elastischen dünnen Kunststofffilm auf ein Spunbond-Vlies aufzubringen. Das resultierende Vliesaggregat zeichnet sich durch eine unzureichende Luftdurchlässigkeit bzw. durch eine geringe Atmungsaktivität aus. Weiterhin ist es bereits bekannt Vliesstoffe bzw. Vlieslaminate mit Fasern aus elastischem Kunststoff auszubilden. Die meisten dieser Vliesstoffe bzw. Vliesaggregate weisen jedoch lediglich eine geringe Voluminösität bzw. eine geringe Weichheit auf. Das liegt daran, dass die Vliese bzw. Vlieslaminate zur Gewährleistung einer ausreichenden Festigkeit verhältnismäßig stark verfestigt werden und somit das Volumen entsprechend reduziert wird. - Im Zuge der Herstellung von Vliesen bzw. Vlieslaminaten sind die Eigenschaften hohes Volumen, hohe Festigkeit und hohe Elastizität in der Regel konkurrierende Eigenschaften. Die Verbesserung einer dieser Eigenschaften geht nicht selten zu Lasten einer anderen der genannten Eigenschaften. Insoweit besteht Verbesserungsbedarf.

Demgegenüber liegt der Erfindung das technische Problem zugrunde, ein Verfahren der eingangs genannten Art anzugeben, mit dem ein Vliesaggregat bzw. Vlieslaminat erzeugt werden kann, dass sich einerseits durch eine hohe Elastizität und zugleich hohe Luftdurchlässigkeit auszeichnet und das sich andererseits auch durch ein hohes Volumen und eine ausreichende Festigkeit auszeichnet. Der Erfindung liegt weiterhin das technische Problem zugrunde, ein entsprechendes Vliesaggregat anzugeben.

Zur Lösung dieses technischen Problems lehrt die Erfindung ein Verfahren zur Herstellung eines Vliesaggregates, wobei zumindest ein Spunbond-Vlies als Spunbond-Basislage erzeugt wird und wobei zumindest ein elastomeres Polymer auf zumindest eine Seite bzw. auf die Oberseite der Spunbond-Basislage aufgebracht wird, wobei die Spunbond-Basislage gekräuselte Endlosfilamente aufweist und vorzugsweise zu mindestens 50 Gew.-% aus gekräuselten Endlosfilamenten besteht, wobei das elastomere Polymer lediglich bereichsweise und zwar in zumindest zwei, vorzugsweise in zumindest drei voneinander beabstandeten Auftragsbereichen auf zumindest eine Seite der Spunbond-Basislage aufgebracht wird und wobei das elastomere Polymer in Form eines Hot-Melt-Bindemittels spannungsfrei bzw. im Wesentlichen spannungsfrei auf eine Seite der Spunbond-Basislage aufgebracht wird. Es liegt im Rahmen der Erfindung, dass das Spunbond-Vlies aus Endlosfilamenten aus thermoplastischen Kunststoff besteht bzw. im Wesentlichen besteht. Gemäß einer bevorzugten Ausführungsform des erfindungsgemäßen Verfahrens wird das zumindest eine elastomere Polymer spannungsfrei bzw. im Wesentlichen spannungsfrei auf zumindest eine Seite bzw. auf die Oberseite der Spunbond-Basislage aufgebracht. Es ist möglich, dass das zumindest eine elastomere Polymer auf die Oberseite und auf die Unterseite der Spunbond-Basislage aufgebracht wird, insbesondere spannungsfrei bzw. im Wesentlichen spannungsfrei aufgebracht wird.

Es ist bevorzugt, dass die Spunbond-Basislage vor dem Auftragen des zumindest einen elastomeren Polymers vorverfestigt wird und zwar insbesondere durch eine beheizte Andruckrolle und/oder durch einen Kalander mit einer definierten Prägefläche bzw. Pressfläche und/oder durch ein temperiertes, insbesondere ein erwärmtes bzw. heißes Fluid.

Es liegt im Rahmen der Erfindung, dass die beabstandeten Auftragsbereiche für das zumindest eine elastomere Polymer mit gleichem Abstand zueinander bzw. im Wesentlichen mit gleichem Abstand zueinander aufgebracht werden. Gemäß einer weiteren Ausführungsform des erfindungsgemäßen Verfahrens erfolgt der Auftrag des zumindest einen elastomeren Polymers derart, dass die voneinander beabstandeten Auftragsbereiche in Mustern bzw. regelmäßigen Mustern angeordnet sind bzw. ein Muster ergeben.

Zweckmäßigerweise wird ein für das erfindungsgemäße Vliesaggregat eingesetztes Spunbond-Vlies mit einer üblichen Spunbond-Vorrichtung hergestellt. Das gilt insbesondere für die erfindungsgemäße Spunbond-Basislage. Vorzugsweise werden dabei Endlosfilamente mittels einer Spinnerette ersponnen und daraufhin in einer Kühleinrichtung abgekühlt. Diese Kühleinrichtung weist bevorzugt eine Kühlkammer auf, durch die die Endlosfilamente zur Kühlung geführt werden. Zweckmäßigerweise sind an zwei gegenüberliegenden Seiten der Kühlkammer Luftzufuhrkabinen für die Zufuhr der Kühlluft angeordnet. Nach einer empfohlenen Ausführungsform sind an zwei gegenüberliegenden Seiten der Kühlkammer übereinander angeordnete Luftzufuhrkabinen vorhanden, insbesondere zwei übereinander angeordnete Luftzufuhrkabinen, aus denen bevorzugt Luft unterschiedlicher Temperatur in die Kühlkammer eingeführt wird. Es empfiehlt sich, dass zwischen der Spinnerette und der Kühleinrichtung eine Monomer-Absaugungseinrichtung vorgesehen ist, mit der beim Spinnprozess auftretende störende Gase aus der Spunbond-Vorrichtung entfernt werden können. Bei diesen Gasen kann es sich beispielsweise um Monomere, Oligomere bzw. Zersetzungsprodukte und dergleichen Substanzen handeln.

Es liegt im Rahmen der Erfindung, dass der Kühleinrichtung in Filamentströmungsrichtung eine Verstreckvorrichtung zum Verstrecken der Endlosfilamente nachgeschaltet ist. Es empfiehlt sich, dass die Verstreckvorrichtung einen Zwischenkanal aufweist, der die Kühleinrichtung mit einem Verstreckschacht der Verstreckvorrichtung verbindet. Nach besonders empfohlener Ausführungsform der Erfindung ist das Aggregat aus der Kühleinrichtung und der Verstreckvorrichtung bzw. das Aggregat aus der Kühleinrichtung, dem Zwischenkanal und dem Verstreckschacht als geschlossenes Aggregat ausgebildet und außer der Zufuhr von Kühlluft in der Kühleinrichtung erfolgt keine weitere Luftzufuhr von außen in dieses Aggregat.

An die Verstreckvorrichtung schließt bevorzugt in Filamentströmungsrichtung ein Diffusor an, durch den die Endlosfilamente geführt werden. Gemäß einer Ausführungsform der Erfindung sind zwei hintereinander geschaltete Diffusoren vorgesehen. Nach Durchlaufen des Diffusors bzw. der Diffusoren werden die Endlosfilamente vorzugsweise auf einer als Ablagesiebband ausgebildeten Ablageeinrichtung abgelegt. Das Ablagesiebband ist nach einer bevorzugten Ausführungsform als endlos umlaufendes Ablagesiebband ausgebildet. Zweckmäßigerweise ist das Ablagesiebband luftdurchlässig ausgeführt, sodass eine Absaugung von Prozessluft von unten durch das Ablagesiebband erfolgen kann. Es liegt im Rahmen der Erfindung, dass im Filamentablagebereich bzw. im Bildungsbereich des Vliesstoffes Prozessluft mittels zumindest eines Gebläses durch das Ablagesiebband gesaugt wird.

Weiterhin liegt es im Rahmen der Erfindung, dass das auf dem Ablagesiebband abgelegte Spunbond-Vlies anschließend verfestigt wird. Eine solche separate Verfestigung des Spunbond-Vlieses bzw. der Spunbond-Basislage wird insbesondere im weiter unten noch näher erläuterten Offline-Modus des erfindungsgemäßen Verfahrens durchgeführt. Diese Verfestigung erfolgt vorzugsweise mit Hilfe zumindest eines Kalanders. Zweckmäßigerweise wird im Rahmen der Erfindung das Spunbond-Vlies bzw. die Spunbond-Basislage lediglich teilweise bzw. punktweise verfestigt. Dazu weist der bevorzugt eingesetzte Kalander eine definierte Prägefläche bzw. Pressfläche auf. Es empfiehlt sich, dass der Kalander zur Verfestigung des Spunbond-Vlieses eine Prägefläche bzw. einen Pressflächenanteil von 4 bis 25 %, vorzugsweise von 5 bis 20 % aufweist. Die Kalandrierung erfolgt zweckmäßigerweise kalt bzw. bei Raumtemperatur. Empfohlenermaßen liegt die Kalandertemperatur unter 80° C. Grundsätzlich kann das Spunbond-Vlies bzw. die Spunbond-Basislage auch durch Wasserstrahlverfestigung oder mechanisches Vernadeln punktweise verfestigt werden. Die Verfestigung mit zumindest einem Kalander wird im Rahmen der Erfindung bevorzugt. - Das vorstehend für die Spunbond-Basislage beschriebene Spunbond-Herstellungsverfahren wird nach empfohlener Ausführungsform auch für zumindest ein Spunbond-Vlies eingesetzt, das als weiter unten erläuterte Decklage auf das Vliesaggregat aufgebracht wird, insbesondere spannungsfrei bzw. im Wesentlichen spannungsfrei aufgebracht wird. Alle vorstehend beschriebenen Merkmale des Spunbond-Verfahrens können einzeln oder in Kombination auch zur Herstellung dieser als Spunbond-Vlies ausgebildeten Decklage eingesetzt werden. Die Decklage bzw. ein für die Decklage eingesetztes Spunbond-Vlies wird - vorzugsweise im Offline-Modus zweckmäßigerweise auch separat lediglich teilweise punktuell verfestigt, wozu bevorzugt die beschriebene Kalandrierung eingesetzt wird

Erfindungsgemäß weist die Spunbond-Basislage gekräuselte Endlosfilamente auf und vorzugsweise bestehen zumindest 50 Gew.-% der Filamente der Spunbond-Basislage aus gekräuselten Endlosfilamenten. Es liegt im Rahmen der Erfindung, dass die Spunbond-Basislage zu mindestens 60 Gew.-%, vorzugsweise zu mindestens 70 Gew.-%, bevorzugt zu mindestens 80 Gew.-%, sehr bevorzugt zu mindestens 90 Gew.-% und besonders bevorzugt zu mindestens 95 Gew.-% aus gekräuselten Endlosfilamenten besteht. Eine ganz besonders empfohlene Ausführungsform der Erfindung ist dadurch gekennzeichnet, dass die Spunbond-Basislage zu mindestens 98 Gew.-% aus gekräuselten Endlosfilamenten besteht. - Es liegt im Rahmen der Erfindung, dass die Endlosfilamente der Spunbond-Basislage Mehrkomponenten-Filamente und insbesondere Bikomponenten-Filamente sind. Weiterhin liegt es im Rahmen der Erfindung, dass die Mehrkomponenten-Filamente bzw. Bikomponenten-Filamente der Spunbond-Basislage eine asymmetrische Konfiguration und insbesondere eine Seite-an-Seite-Konfiguration und/oder eine Kern-Mantel-Konfiguration, vorzugsweise eine exzentrische Kern-Mantel-Konfiguration aufweisen.

Erfindungsgemäß wird das elastomere Polymer in Form eines Hot-Melt-Bindemittels bzw. Hot-Melt-Klebstoffes auf eine Seite der Spunbond-Basislage spannungsfrei bzw. im Wesentlichen spannungsfrei aufgebracht. Es liegt im Rahmen der Erfindung, dass das Hot-Melt-Bindemittel aus zumindest einem thermoplastischen elastomeren Polymer besteht und dass dieses Bindemittel bzw. Polymer vorzugsweise schmelzflüssig auf die Spunbond-Basislage aufgebracht wird, insbesondere spannungsfrei bzw. im Wesentlichen spannungsfrei aufgebracht wird. Die Aufbringung erfolgt dabei gemäß einer Ausführungsform mit Hilfe zumindest einer Walze bzw. Andruckwalze. Zweckmäßigerweise wird das elastomere Polymer bzw. das Hot-Melt-Bindemittel mittels zumindest einer Schlitzdüse und/oder mittels zumindest einer Sprühdüse auf eine Seite der Spunbond-Basislage aufgebracht, insbesondere spannungsfrei bzw. im Wesentlichen spannungsfrei aufgebracht. Das Aufbringen mittels einer Schlitzdüse hat sich dabei besonders bewährt. Grundsätzlich kann das elastomere Polymer auch mittels eines zwischengeschalteten Klebers bzw. Sprühklebers auf der Spunbond-Basislage fixiert werden.

Das Vliesaggregat kann im Rahmen des erfindungsgemäßen Verfahrens entweder inline oder offline erzeugt werden. - Bei der Inline-Herstellung des Vliesaggregates werden die Endlosfilamente für die Spunbond-Basislage auf der Ablageeinrichtung bzw. auf dem Ablagesiebband zur Vliesbahn abgelegt und anschließend erfolgt - zweckmäßigerweise kontinuierlich - das Aufbringen des Elastomers auf eine Seite bzw. auf die Oberseite der Spunbond-Basislage, vorzugsweise in Form eines Hot-Melt-Bindemittels in schmelzflüssiger Form und besonders bevorzugt mittels einer Schlitzdüse. Das Aufbringen des elastomeren Polymers erfolgt dabei empfohlenermaßen auf der auf dem Ablagesiebband transportierten Spunbond-Basislage. Die Transportrichtung der Spunbond-Basislage entspricht der Maschinenrichtung (MD). Bei dem bevorzugten Aufbringen des elastomeren Polymers bzw. des Hot-Melt-Bindemittels mit Hilfe einer Schlitzdüse und/oder mit Hilfe einer Sprühdüse, erstreckt sich die jeweilige Düse vorzugsweise quer zur Maschinenrichtung (in CD-Richtung) und dann erfolgt ein kontinuierliches Aufbringen des elastomeren Polymers bzw. des Hot-Melt-Bindemittels lediglich bereichsweise auf eine Seite bzw. auf die Oberseite der Spunbond-Basislage.

Bei der Offline-Erzeugung eines erfindungsgemäßen Vliesaggregates wird gemäß einer bevorzugten Ausführungsform die Spunbond-Basislage zunächst separat hergestellt sowie vorzugsweise separat verfestigt bzw. kalandriert und insbesondere zu einem späteren Zeitpunkt wird dann das elastomere Polymer bzw. das Hot-Melt-Bindemittel auf eine Seite der Spunbond-Basislage aufgebracht, insbesondere spannungsfrei bzw. im Wesentlichen spannungsfrei aufgebracht. Das Aufbringen kann dabei zweckmäßigerweise ebenfalls mittels zumindest einer Schlitzdüse und/oder mittels zumindest einer Sprühdüse erfolgen.

Es liegt im Rahmen der Erfindung, dass das elastomere Polymer bzw. das Hot-Melt-Bindemittel unmittelbar und ohne Zwischenschaltung einer weiteren Schicht, insbesondere ohne Zwischenschaltung eines Films bzw. eines Kunststofffilms auf eine Seite bzw. auf die Oberseite der Spunbond-Basislage aufgebracht wird, insbesondere spannungsfrei bzw. im Wesentlichen spannungsfrei aufgebracht wird. Das elastomere Polymer bzw. das Hot-Melt-Bindemittel hat dabei also direkten Kontakt mit den Endlosfilamenten der Spunbond-Basislage.

Grundsätzlich kann das elastomere Polymer im Rahmen des erfindungsgemäßen Verfahrens auf verschiedene Art und Weise auf die Spunbond-Basislage aufgebracht werden solange die Maßgabe eingehalten wird, dass das elastomere Polymer lediglich bereichsweise und zwar in zumindest zwei, vorzugsweise in zumindest drei voneinander beanstandeten Auftragsbereichen auf die betreffende Seite der Spunbond-Basislage aufgebracht wird, insbesondere spannungsfrei bzw. im Wesentlichen spannungsfrei aufgebracht wird. Nach einer Ausführungsform der Erfindung kann das elastomere Polymer in Form von Fasern bzw. Filamenten, beispielsweise in Form von Meltblown-Filamenten auf die Spunbond-Basislage aufgebracht werden. Dann wird das elastomere Polymer zweckmäßigerweise in Form von elastomeren Meltblown-Fasern aufgebracht. Grundsätzlich können auch andere elastomere Fasern bzw. Filamente eingesetzt werden.

Es liegt im Rahmen der Erfindung, dass das elastomere Polymer bzw. dass das Hot-Melt-Bindemittel in einer Mehrzahl von zueinander beabstandeten Bereichen auf einer Seite der Spunbond-Basislage aufgebracht wird, wobei vorzugsweise mehr als drei, bevorzugt mehr als vier, sehr bevorzugt mehr als fünf und besonders bevorzugt mehr als sechs voneinander beabstandete Bereiche vorhanden sind, die mit dem elastomeren Polymer bzw. mit dem Hot-Melt-Bindemittel beschichtet sind. Gemäß einer Ausführungsform der Erfindung sind mehr als acht und bevorzugt mehr als zehn voneinander beabstandete Bereiche mit elastomerem Polymer auf der betreffenden Seite der Spunbond-Basislage vorhanden. Gemäß einer anderen Ausführungsvariante sind mehr als zwölf und bevorzugt mehr als fünfzehn voneinander beabstandete Auftragsbereiche mit elastomerem Polymer auf einer Seite der Spunbond-Basislage vorgesehen.

Nach einer sehr bevorzugten Ausführungsform, der im Rahmen der Erfindung ganz besondere Bedeutung zukommt, wird das elastomere Polymer bzw. wird vorzugsweise das Hot-Melt-Bindemittel in Form von Streifen oder Raupen auf einer Seite der Spunbond-Basislage aufgebracht. Vorzugsweise ist dabei die Längsrichtung der Streifen oder Raupen in Längsrichtung bzw. in Maschinenrichtung (MD) der Spunbond-Basislage orientiert bzw. im Wesentlichen orientiert. Bei der Inline-Erzeugung des erfindungsgemäßen Vliesaggregates erstreckt sich empfohlenermaßen die Längsrichtung der Streifen oder Raupen in Transportrichtung der auf der Ablageeinrichtung bzw. auf dem Ablagesiebband transportierten Spunbond-Basislage. Zweckmäßigerweise sind die Streifen oder Raupen parallel bzw. im Wesentlichen parallel zueinander auf der Spunbond-Basislage angeordnet. Es liegt im Rahmen der Erfindung, dass quer zur Längsrichtung der Spunbond-Basislage bzw. quer zur Maschinenrichtung zumindest zwei, vorzugsweise zumindest drei, bevorzugt zumindest vier, sehr bevorzugt zumindest fünf und besonders bevorzugt zumindest sechs Streifen oder Raupen nebeneinander zw. hintereinander vorgesehen sind.

Eine empfohlene Ausführungsform der Erfindung ist dadurch gekennzeichnet, dass die Dicke D der Streifen oder Raupen des elastomeren Polymers bzw. des Hot-Melt-Bindemittels 0,1 bis 6 mm, vorzugsweise 0,15 bis 4 mm und bevorzugt 0,2 bis 2 mm beträgt. Dicke D meint im Rahmen der Erfindung insbesondere die Ausdehnung des Streifens oder der Raupe quer, insbesondere senkrecht zur Oberseite der Spunbond-Basislage und somit quer bzw. senkrecht sowohl zur Maschinenrichtung (MD) als auch zur CD-Richtung. - Nach besonders bevorzugter Ausführungsform der Erfindung beträgt die Breite B der Streifen oder Raupen quer zur Maschinenrichtung (in CD-Richtung) 0,25 bis 6 mm, vorzugsweise 0,5 bis 4 mm und bevorzugt 1 bis 3 mm. Die Breite B wird insbesondere quer zur Maschinenrichtung bzw. in CD-Richtung gemessen.

Eine empfohlene Ausführungsform der Erfindung ist dadurch gekennzeichnet, dass der gegenseitige Abstand zweier benachbarter Streifen oder Raupen in CD-Richtung mindestens 0,1 mm, vorzugsweise mindestens 0,2 mm und bevorzugt mindestens 0,5 mm beträgt. Nach einer bevorzugten Ausführungsvariante beträgt dieser Abstand zwischen den Streifen oder Raupen in CD-Richtung mindestens 1 mm und bevorzugt mindestens 1,5 mm sowie sehr bevorzugt mindestens 2 mm. - Die Streifen oder Raupen werden zweckmäßigerweise in Form von Endlosstreifen oder Endlosraupen auf die Spunbond-Basislage aufgebracht. Die Begriffe Endlosstreifen und Endlosraupen sind analog dem Begriff Endlosfilamente zu verstehen.

Es liegt im Rahmen der Erfindung, dass das elastomere Polymer bzw. das Hot-Melt-Bindemittel maximal 70 %, vorzugsweise maximal 50 % und bevorzugt maximal 45 % sowie sehr bevorzugt maximal 40 % der Fläche der damit beschichteten Seite der Spunbond-Basislage bedeckt. Zweckmäßigerweise bedeckt das elastomere Polymer bzw. das Hot-Melt-Bindemittel 15 bis 60 %, vorzugsweise 20 bis 50 % und besonders bevorzugt 20 bis 40 % der Fläche der damit beschichteten Seite der Spunbond-Basislage. Gemäß einer Ausführungsform der Erfindung bedeckt das elastomere Polymer bzw. das Hot-Melt-Bindemittel 25 bis 35 % der Fläche der betreffenden Seite der Spunbond-Basislage.

Nach bevorzugter Ausführungsform des erfindungsgemäßen Verfahrens wird als elastomeres Polymer bzw. als Hot-Melt-Bindemittel zumindest ein thermoplastischer Kautschuk, insbesondere zumindest ein thermoplastischer Synthese-Kautschuk eingesetzt. Empfohlenermaßen besteht das elastomere Polymer bzw. das Hot-Melt-Bindemittel zu mindestens 50 Gew.-%, vorzugsweise zu mindestens 60 Gew.-%, bevorzugt zu mindestens 70 Gew.-%, sehr bevorzugt zu mindestens 80 Gew.-% und besonders bevorzugt mindestens 90 Gew.-% aus einem thermoplastischen Kautschuk bzw. aus einem thermoplastischen Synthese-Kautschuk.

Es liegt im Rahmen der Erfindung, dass das erfindungsgemäße Vliesaggregat als Laminat mit zumindest einer auf das elastomere Polymer bzw. auf das Hot-Melt-Bindemittel aufgebrachten Decklage ausgebildet wird. Somit wird nach dieser sehr bevorzugten Ausführungsform ein mindestens dreischichtiges bzw. dreischichtiges Laminat mit der Schichtenfolge (zweckmäßigerweise von unten nach oben) Spunbond-Basislage / elastomeres Polymer bzw. Hot-Melt-Bindemittel / Decklage ausgebildet. Vorzugsweise bedeckt die Decklage zumindest 80 %, bevorzugt zumindest 90 % und sehr bevorzugt zumindest 95 % der Fläche der darunter angeordneten Spunbond-Basislage. Es empfiehlt sich, dass die Decklage die Spunbond-Basislage vollständig bzw. im Wesentlichen vollständig abdeckt. Es empfiehlt sich weiterhin, dass die Decklage das auf die Spunbond-Basislage aufgebrachte elastomere Polymer bzw. das Hot-Melt-Bindemittel vollständig bzw. im Wesentlichen vollständig abdeckt.

Gemäß einer sehr bevorzugten Ausführungsform der Erfindung ist die Decklage zumindest ein Vliesstoff bzw. ein Vliesstoff und vorzugsweise ein Spunbond-Vlies und/oder ein Meltblown-Vlies. Zweckmäßigerweise wird dieser Vliesstoff bzw. dieses Vlies unmittelbar auf das elastomere Polymer bzw. auf das Hot-Melt-Bindemittel aufgebracht und zwar insbesondere ohne Zwischenschaltung eines Films bzw. Kunststofffilms. Eine besonders empfohlene Ausführungsform ist dadurch gekennzeichnet, dass ein als Decklage ausgebildeter Vliesstoff, insbesondere ein als Decklage ausgebildetes Spunbond-Vlies gekräuselte Endlosfilamente aufweist und bevorzugt zu mindestens 50 Gew.-% aus gekräuselten Endlosfilamenten besteht. Zweckmäßigerweise besteht ein als Decklage ausgebildetes Spunbond-Vlies zu mindestens 60 Gew.-%, vorzugsweise zu mindestens 70 Gew.-%, bevorzugt zu mindestens 80 Gew.-% und sehr bevorzugt zu mindestens 90 Gew.-% aus gekräuselten Endlosfilamenten. Es empfiehlt sich, dass die Endlosfilamente für ein die Decklage bildendes Spunbond-Vlies als Mehrkomponenten-Filamente bzw. als Bikomponenten-Filamente und ganz besonders bevorzugt als Bikomponenten-Filamente ausgebildet sind. Empfohlenermaßen weisen die Mehrkomponenten-Filamente bzw. Bikomponenten-Filamente für die Decklage bzw. für das Spunbond-Vlies der Decklage eine asymmetrische Konfiguration und insbesondere eine Seite-an-Seite-Konfiguration und/oder eine Kern-Mantel-Konfiguration auf, vorzugsweise eine exzentrische Kern-Mantel-Konfiguration.

Es liegt im Rahmen der Erfindung, dass das zumindest eine elastomere Polymer lediglich bereichsweise und zwar in zumindest zwei voneinander beabstandeten Auftragsbereichen auf zumindest eine Seite bzw. die Oberseite der Spunbond-Basislage und auf zumindest eine Seite der Decklage aufgebracht wird, insbesondere spannungsfrei aufgebracht wird.

Es liegt im Rahmen der Erfindung, dass das erfindungsgemäße Vliesaggregat bzw. das Laminat verfestigt wird und dabei bevorzugt lediglich punktuell verfestigt bzw. lediglich punktuell gebondet wird. Dieser lediglich punktuellen Verfestigung kommt im Rahmen der Erfindung ganz besondere Bedeutung zu und dieses Merkmal trägt effektiv zur Lösung des erfindungsgemäßen technischen Problems bei. Die punktuelle Verfestigung des Vliesaggregates bzw. des Laminates wird nach empfohlener Ausführungsform der Erfindung mittels zumindest eines Kalanders durchgeführt. Der Kalander weist dabei bevorzugt eine Prägefläche bzw. einen Pressflächenanteil von 4 bis 25 %, vorzugsweise von 4 bis 20 % und bevorzugt von 5 bis 20 % auf. Eine punktuelle Verfestigung des erfindungsgemäßen Vliesaggregates bzw. Laminates ist grundsätzlich auch durch andere Verfestigungsmaßnahmen möglich, beispielsweise durch Wasserstrahlverfestigung und/oder durch mechanisches Vernadeln oder andere Verfestigungsmaßnahmen mit lediglich punktueller Verfestigung. Die punktuelle Verfestigung mittels eines Kalanders wird im Rahmen der Erfindung aber bevorzugt. Es empfiehlt sich, dass bei der punktuellen Verfestigung mittels eines Kalanders mit kalten Kalanderwalzen bzw. mit Kalanderwalzen bei Raumtemperatur gearbeitet wird. Zweckmäßigerweise liegt die Kalandertemperatur unterhalb von 80° C.

Die Verfestigung bzw. die lediglich punktuelle Verfestigung des Vliesaggregates bzw. Laminates erfolgt bevorzugt bei der Inline-Erzeugung des erfindungsgemäßen Vliesaggregates bzw. Laminates. Bei einer Offline-Herstellung kann auf diese Verfestigung bzw. punktuelle Verfestigung des gesamten Vliesaggregates grundsätzlich verzichtet werden. In diesem Fall erfolgt eine separate Verfestigung bzw. punktuelle Verfestigung der Spunbond-Basislage und gegebenenfalls eines Vlieses bzw. Spunbond-Vlieses für die Decklage. Dann gelten für diese separaten Verfestigungen der beiden Vliese bzw. Spunbond-Vliese vorzugsweise die gleichen Merkmale bzw. Parameter wie vorstehend zu dem Vliesaggregat beschrieben.

Es liegt im Rahmen der Erfindung, dass das Vliesaggregat bzw. das Laminat zwecks Aktivierung gedehnt wird. Vorzugsweise erfolgt die Dehnung mit Hilfe von Aktivierungswalzen und zwar zweckmäßigerweise im Anschluss an die punktuelle Verfestigung des Vliesaggregates bzw. des Laminates. Es liegt weiterhin im Rahmen der Erfindung, dass bei der Dehnung des Vliesaggregates ein teilweise Aufbrechen der Verfestigungspunkte bzw. Bondingpunkte stattfindet und somit bei dieser Aktivierung gleichsam freie Filamentlängen freigelegt werden, die eine optimale Elastizität sicherstellen, wobei nichtsdestoweniger auch eine ausreichende Festigkeit des Vliesaggregates bzw. Laminates eingehalten werden kann. Zweckmäßigerweise handelt es sich bei den für die Dehnung bzw. Aktivierung des Vliesaggregates bzw. Laminates eingesetzten Aktivierungswalzen um sogenannte Biax-Walzen. Bei Biax-Walzen handelt es sich um Walzen bzw. Walzenpaare der Firma Biax-Fiberfilm, die das Vliesaggregat in Maschinenrichtung und/oder quer zur Maschinenrichtung dehnen können. - Vorzugsweise erfolgt die Aktivierung bzw. Dehnung in Längsrichtung bzw. in Maschinenrichtung des Vliesaggregates bzw. des Laminates. Gemäß einer empfohlenen Ausführungsform wird nach der Aktivierung bzw. Dehnung des Vliesaggregates noch eine Prägung an der Oberfläche des Vliesaggregates durchgeführt. Dadurch wird eine möglichst saubere bzw. homogene Oberflächenstruktur erreicht.

Zur Lösung des technischen Problems lehrt die Erfindung weiterhin ein Vliesaggregat gemäß Patentanspruch 13. Das erfindungsgemäße Vliesaggregat bzw. Vlieslaminat kann grundsätzlich in verschiedensten Anwendungsbereichen eingesetzt werden. Es eignet sich insbesondere für die Herstellung von Windeln, Wundauflagen, Masken und dergleichen Produkte.

Der Erfindung liegt die Erkenntnis zugrunde, dass sich ein erfindungsgemäß erzeugtes Vliesaggregat bzw. Vlieslaminat zunächst durch eine hervorragende Elastizität auszeichnet. Ein solches Vliesaggregat kann in der Regel mehr als 100 % in seiner Längsrichtung gedehnt werden und kehrt dann problemlos unter Einwirkung elastischer Rückstellkräfte in seine Ausgangslage zurück. Der rein elastische Bereich wird dabei im Wesentlichen durch die Vlieslage bzw. durch die Vlieslagen bestimmt. Zusätzlich genügt die Luftdurchlässigkeit bzw. Atmungsaktivität des Aggregates bzw. Laminates allen Anforderungen. Besonders hervorzuheben ist, dass ein Vliesaggregat bzw. Vlieslaminat erzeugt werden kann, das neben der hohen Elastizität und der optimalen Luftdurchlässigkeit auch eine hohe Voluminösität bzw. eine hohe Weichheit aufweist. Zudem genügt das Aggregat bzw. Laminat auch in festigkeitsmäßiger Hinsicht allen Anforderungen. Somit kann im Vergleich zu den aus dem Stand der Technik bekannten Aggregaten bzw. Laminaten ein optimaler Kompromiss in Bezug auf die verschiedenen Vorteile erreicht werden. Fernerhin lassen sich in vorteilhafter Weise sehr homogene und gleichmäßige Produkte erzeugen. Zu betonen ist weiterhin, dass die erfindungsgemäßen Vorteile (Elastizität, Atmungsaktivität, hohe Voluminösität, optimale Festigkeit und Homogenität) mit relativ einfachen und wenig aufwendigen Mitteln erzielt werden können. Das erfindungsgemäße Verfahren zeichnet sich somit auch durch Kostengünstigkeit aus. Das erfindungsgemäße Verfahren kann sowohl inline als auch offline auf zügige und wenig aufwändige Weise durchgeführt werden und dabei können optimale und reproduzierbare Resultate erhalten werden. Wesentlich ist weiterhin, dass bereits vorhandene Komponenten - insbesondere von Spunbond-Anlagen - ohne Weiteres im Rahmen des erfindungsgemäßen Verfahrens eingesetzt werden können und zur Durchführung der speziellen Verfahrensmaßnahmen lediglich geringe und wenig aufwändige Umrüstmaßnahmen erforderlich sind.

Nachfolgend wird die Erfindung anhand einer lediglich ein Ausführungsbeispiel darstellenden Zeichnung näher erläutert. Es zeigen in schematischer Darstellung:
- Fig. 1: einen Vertikalschnitt durch eine bevorzugte Ausführungsform einer Spunbond-Vorrichtung zur Erzeugung einer Spunbond-Basislage für das erfindungsgemäße Vliesaggregat bzw. Vlieslaminat,
- Fig. 2: eine Seitenansicht einer ersten Ausführungsform einer Vorrichtung zur Durchführung des erfindungsgemäßen Verfahrens im Inline-Modus,
- Fig. 3: eine perspektivische Ansicht eines Vliesaggregates aus einer Spunbond-Basislage und darauf streifenförmig aufgebrachtem elastomeren Polymer,
- Fig. 4: den Gegenstand nach Figur 2 in einer zweiten Ausführungsform im Inline-Modus,
- Fig. 5: den Gegenstand gemäß Figur 2 in einer dritten Ausführungsform im Inline-Modus,
- Fig. 6: den Gegenstand nach Figur 2 in einer vierten Ausführungsform im Inline-Modus,
- Fig. 7: eine Seitenansicht einer Vorrichtung zur Durchführung des erfindungsgemäßen Verfahrens in einer ersten Ausführungsform im Offline-Modus,
- Fig. 8: den Gegenstand nach Figur 7 in einer zweiten Ausführungsform im Offline-Modus,
- Fig. 9: den Gegenstand gemäß Figur 7 in einer dritten Ausführungsform im Offline-Modus,
- Fig. 10: den Gegenstand nach Figur 7 in einer vierten Ausführungsform im Offl ine-Modus.

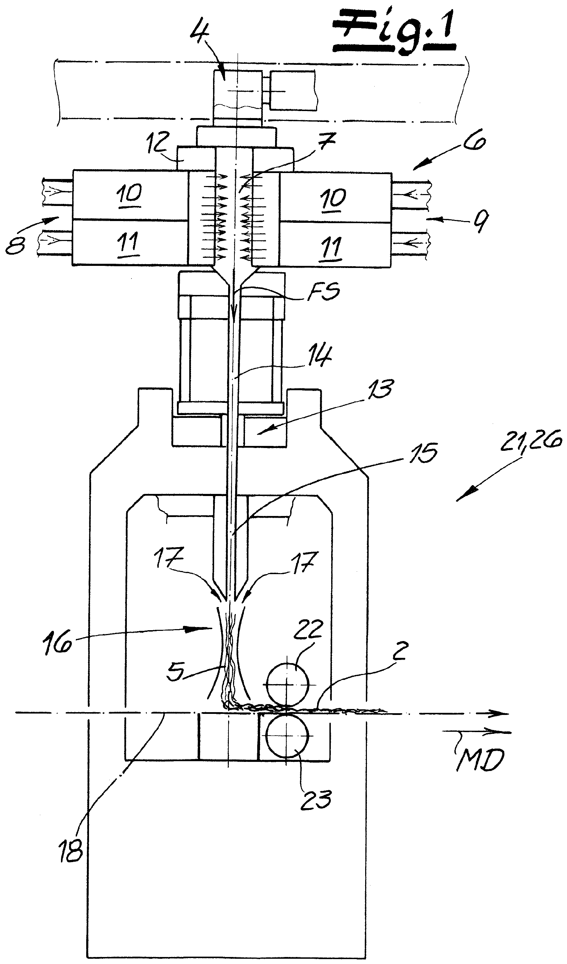

Die Figuren zeigen Ausführungsformen von Vorrichtungen für die Durchführung des erfindungsgemäßen Verfahrens zur Herstellung eines Vliesaggregates 1. - In der Fig. 1 ist eine bevorzugte Vorrichtung zur Erzeugung eines Spunbond-Vlieses 2 dargestellt, das als Spunbond-Basislage 2 in dem erfindungsgemäßen Vliesaggregat 1 eingesetzt wird. Mit dieser Vorrichtung wird vorzugsweise auch ein Spunbond-Vlies erzeugt, das nach einer empfohlenen Ausführungsform der Erfindung als Decklage 3 in dem erfindungsgemäßen Vliesaggregat 1 bzw. Vlieslaminat verwendet wird.

Die Vorrichtung gemäß Fig. 1 umfasst eine Spinnerette 4 zum Erspinnen der Endlosfilamente 5 für die Spunbond-Basislage 2. Bei den Endlosfilamenten 5 handelt es sich um gekräuselte Endlosfilamente 5 aus thermoplastischen Kunststoff. Diese Endlosfilamente 5 sind beispielsweise als Bikomponenten-Filamente mit exzentrischer Kern-Mantel-Konfiguration ausgebildet.

Die ersponnenen Endlosfilamente 5 werden bevorzugt in eine Kühleinrichtung 6 mit einer Kühlkammer 7 und mit an zwei gegenüberliegenden Seiten der Kühlkammer 7 angeordneten Luftzufuhrkabinen 8, 9 eingeführt. Die Kühlkammer 7 und die Luftzufuhrkabinen 8, 9 erstrecken sich quer zur Maschinenrichtung MD und somit in CD-Richtung der Vorrichtung. Aus den gegenüberliegenden Luftzufuhrkabinen 8, 9 wird Kühlluft in die Kühlkammer 7 eingeführt. Nach bevorzugter Ausführungsform und im Ausführungsbeispiel ist jede Luftzufuhrkabine 5, 6 in zwei Kabinenabschnitte 10, 11 unterteilt, aus denen jeweils Kühlluft von bevorzugt unterschiedlicher Temperatur zuführbar ist.

Nach empfohlener Ausführungsform ist zwischen der Spinnerette 4 und der Kühleinrichtung 6 eine Monomer-Absaugungseinrichtung 12 angeordnet. Mit dieser Monomer-Absaugungseinrichtung 12 können beim Spinnprozess auftretende störende Gase aus der Vorrichtung entfernt werden. Bei diesen Gasen kann es sich beispielsweise um Monomere, Oligomere bzw. Zersetzungsprodukte und dergleichen Substanzen handeln.

Zweckmäßigerweise und im Ausführungsbeispiel ist der Kühleinrichtung 6 in Filamentströmungsrichtung FS eine Verstreckvorrichtung 13 nachgeschaltet, mit der die Endlosfilamente 5 verstreckt werden. Die Verstreckvorrichtung 13 weist vorzugsweise und im Ausführungsbeispiel einen Zwischenkanal 14 auf, der die Kühleinrichtung 6 mit einem Verstreckschacht 15 der Verstreckvorrichtung 13 verbindet. Nach sehr empfohlener Ausführungsform und im Ausführungsbeispiel ist das Aggregat aus der Kühleinrichtung 6 und der Verstreckvorrichtung 13 bzw. das Aggregat aus der Kühleinrichtung 6, dem Zwischenkanal 14 und dem Verstreckschacht 15 als geschlossenes System ausgebildet. Geschlossenes System meint dabei insbesondere, dass außer der Zufuhr von Kühlluft in der Kühleinrichtung 6 keine weitere Luftzufuhr in dieses Aggregat erfolgt.

Bevorzugt und im Ausführungsbeispiel schließt in Filamentströmungsrichtung FS an die Verstreckvorrichtung 13 ein Diffusor 16 an, durch den die Endlosfilamente 5 geführt werden. Gemäß einer empfohlenen Ausführungsform und im Ausführungsbeispiel sind zwischen der Verstreckvorrichtung 13 bzw. zwischen dem Verstreckschacht 15 und dem Diffusor 16 Sekundärluft-Eintrittspalte 17 für die Einführung von Sekundärluft in den Diffusor 16 vorgesehen. Statt eines Diffusors 16 können in Filamentströmungsrichtung FS auch zwei oder mehr Diffusoren hintereinander geschaltet werden. - Nach Durchlaufen des Diffusors 16 werden im Ausführungsbeispiel die Endlosfilamente 5 zweckmäßigerweise auf einer als Ablagesiebband 18 ausgebildeten Ablageeinrichtung abgelegt. Die Filamentablage bzw. die Spunbond-Basislage 2 wird dann zweckmäßigerweise mit dem Ablagesiebband 18 in Maschinenrichtung MD abgefördert bzw. abtransportiert. Zweckmäßigerweise und im Ausführungsbeispiel ist unter der Ablageeinrichtung bzw. unter dem Ablagesiebband 18 eine Absaugungseinrichtung zum Absaugen von Luft bzw. Prozessluft durch das Ablagesiebband 18 vorgesehen.

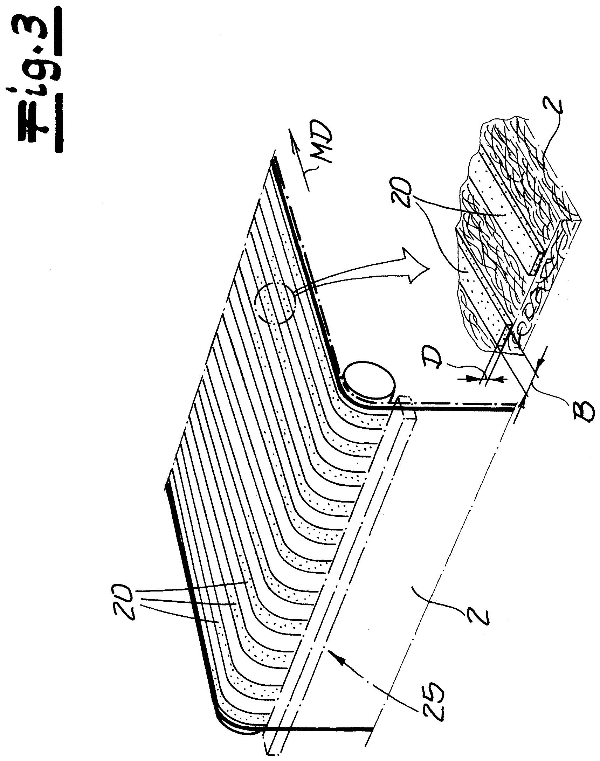

Zur Erzeugung des erfindungsgemäßen Vliesaggregates 1 wird ein elastomeres Polymer 19 auf eine Seite bzw. auf die Oberseite der Spunbond-Basislage 2 aufgebracht. Bei dem elastomeren Polymer handelt es sich vorzugsweise und im Ausführungsbeispiel um einen thermoplastischen Kautschuk bzw. Synthese-Kautschuk, der insbesondere im Temperaturbereich zwischen 140 und 200° C, bevorzugt zwischen 150 und 185° C schmilzt. Das elastomere Polymer 19 wird lediglich bereichsweise und zwar in einer Mehrzahl von zueinander beabstandeten Auftragsbereichen auf die Oberseite der Spunbond-Basislage 2 aufgebracht. Empfohlenermaßen wird das elastomere Polymer 19 streifenförmig auf die Spunbond-Basislage 2 aufgebracht, wobei sich die Streifen 20 aus dem elastomeren Polymer 19 bevorzugt und im Ausführungsbeispiel in Längsrichtung der Spunbond-Basislage 2 bzw. in Maschinenrichtung MD erstrecken. Vorzugsweise und im Ausführungsbeispiel sind die voneinander beabstandeten Streifen 20 parallel bzw. im Wesentlichen parallel zueinander angeordnet. Hierzu kann auf die Fig. 3 verwiesen werden. In der Fig. 3 ist im Übrigen erkennbar, dass die Streifen 20 eine Dicke D senkrecht zur Oberseite der Spunbond-Basislage 2 aufweisen sowie eine Breite B in CD-Richtung. Vorzugsweise beträgt die Dicke D 0,1 bis 6 mm und die Breite B 0,25 bis 6 mm.

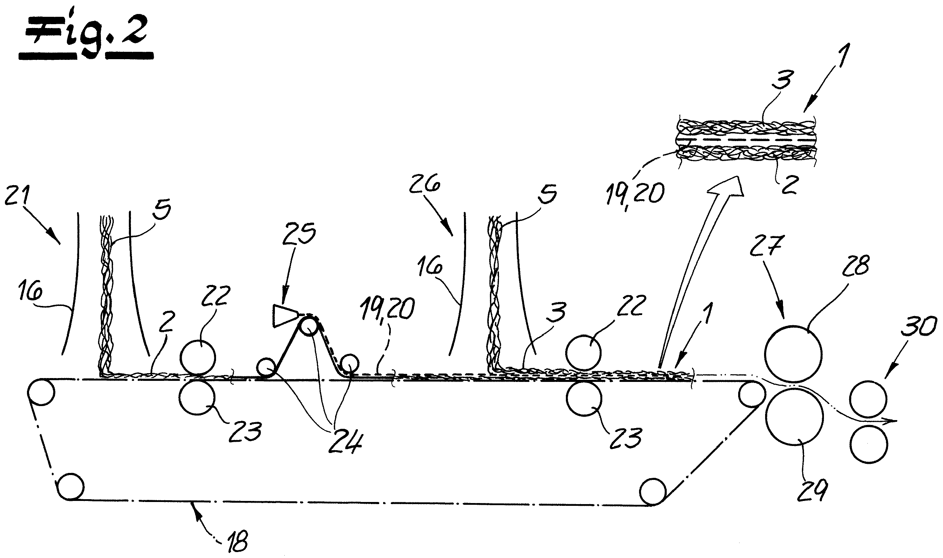

Die Fig. 2 zeigt eine erste bevorzugte Ausführungsform zur Inline-Herstellung eines erfindungsgemäßen Vliesaggregates 1. Mittels einer ersten Spunbond-Vorrichtung 21 wird aus gekräuselten Endlosfilamenten 5 die Spunbond-Basislage 2 erzeugt. In den Figuren ist von den Spunbond-Vorrichtungen 21, 26 der Einfachheit halber lediglich der Diffusor 16 abgebildet, aus dem die Endlosfilamente 5 austreten um dann auf dem Ablagesiebband 18 abgelegt zu werden. Im Ausführungsbeispiel nach Fig. 2 wird die Spunbond-Basislage 2 zunächst mit Hilfe von Kompaktierwalzen 22, 23 kompaktiert. Im Anschluss daran wird das elastomere Polymer 19 in Form eines Hot-Melt-Bindemittels, vorzugsweise schmelzflüssig auf die Spunbond-Basislage 2 streifenförmig aufgebracht. Dazu wird bevorzugt und im Ausführungsbeispiel nach Fig. 2 die Spunbond-Basislage 2 mit Hilfe von Manipulierwalzen 24 von dem Ablagesiebband 18 abgehoben und im Bereich einer oberen vom Ablagesiebband 18 beabstandeten Manipulierwalze 24 wird das Hot-Melt-Bindemittel empfohlenermaßen und im Ausführungsbeispiel nach Fig. 2 mit Hilfe einer Schlitzdüse 25 streifenförmig aufgetragen. Es versteht sich, dass die Schlitzdüse 25 mit der Maßgabe ausgestaltet ist, dass das elastomere Polymer 19 bzw. das Hot-Melt-Bindemittel lediglich in Form von Streifen bzw. zueinander parallelen Streifen auf die Spunbond-Basislage 2 aufgebracht wird. - Fig. 3 zeigt im Übrigen eine mit solchen Streifen 20 des Hot-Melt-Bindemittels versehene Spunbond-Basislage 2. - Nach bevorzugter Ausführungsform und im Ausführungsbeispiel nach Fig. 2 wird nach dem streifenförmigen Aufbringen des elastomeren Polymers 19 eine Decklage 3 auf das elastomere Polymer 19 aufgelegt. Zweckmäßigerweise und im Ausführungsbeispiel handelt es sich bei dieser Decklage 3 ebenfalls um ein Spunbond-Vlies, das im Ausführungsbeispiel nach Fig. 2 mit einer zweiten Spunbond-Vorrichtung 26 erzeugt wird. In Fig. 2 ist erkennbar, dass die Endlosfilamente 5 für diese Decklage 3 aus dem Diffusor 16 der zweiten Spunbond-Vorrichtung 26 austreten. Im Ausführungsbeispiel nach Fig. 2 wird dann das Vliesaggregat 1 aus der Spunbond-Basislage 2, dem elastomeren Polymer 19 und der Decklage 3 mit Hilfe von Kompaktierwalzen 22, 23 kompaktiert. Gemäß besonders bevorzugter Ausführungsform und im Ausführungsbeispiel nach Fig. 2 wird das Vliesaggregat 1 dann mit Hilfe eines Kalanders 27 verfestigt. Mit dem Kalander 27 wird das Vliesaggregat 1 bzw. das Laminat lediglich punktuell verfestigt bzw. gebondet. Der Kalander 27 weist im Ausführungsbeispiel eine obere Kalanderwalze 28 und eine untere Kalanderwalze 29 auf. Die Prägefläche bzw. der Pressflächenanteil des Kalanders 27 beträgt bevorzugt und im Ausführungsbeispiel 4 bis 25 %. Vorzugsweise wird die Kalandrierung des Vliesaggregates 1 kalt bzw. bei Raumtemperatur durchgeführt. Zweckmäßigerweise beträgt die Kalandertemperatur zumindest weniger als 80° C.

Es liegt im Rahmen der Erfindung, dass das erfindungsgemäße Vliesaggregat 1 mit Hilfe von Aktivierungswalzen 30 aktiviert bzw. gedehnt wird. Die Dehnung des Vliesaggregates 1 erfolgt dabei in Längsrichtung des Vliesaggregates 1 bzw. in Maschinenrichtung MD. Bei der Aktivierung werden zweckmäßigerweise bei der punktuellen Verfestigung gebildete Verfestigungspunkte bzw. Bondingpunkte teilweise wieder aufgebrochen, sodass gleichsam freie Filamentlängen entstehen. Dadurch wird letztendlich ein in Längsrichtung hochelastisches Vliesaggregat 1 bzw. Vlieslaminat erhalten. Die Aktivierungswalzen sind bevorzugt als sogenannte Biax-Walzen ausgebildet. Gemäß bevorzugter Ausführungsform erfolgt zunächst eine punktuelle Verfestigung mittels eines Kalanders 27 und anschließend eine Dehnung des Vliesaggregates 1 in Längsrichtung mit Hilfe von Aktivierungswalzen 30. Der Aktivierung kommt im Rahmen der Erfindung besondere Bedeutung zu.

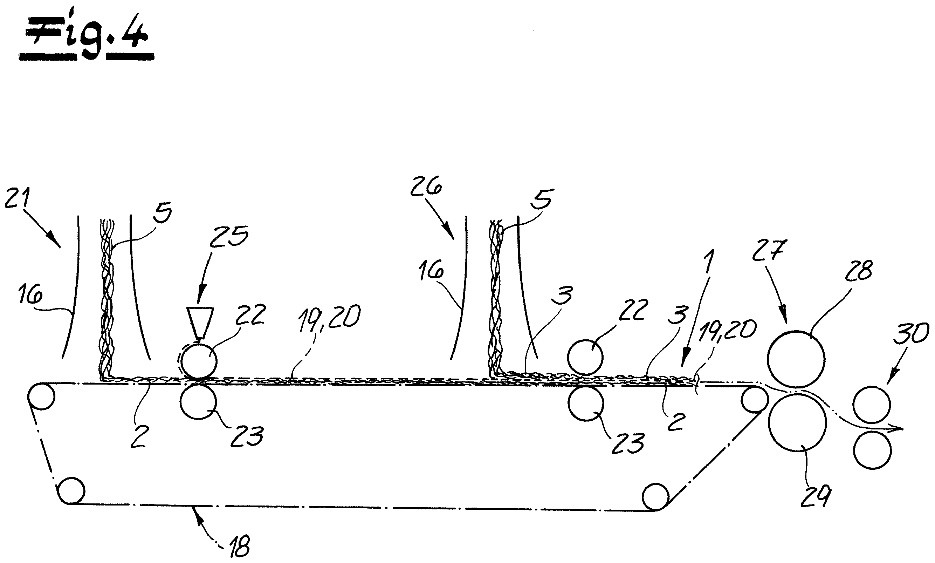

Die Fig. 4 zeigt eine zweite Ausführungsform einer Vorrichtung zur Durchführung des erfindungsgemäßen Verfahrens bei einer Inline-Erzeugung des Vliesaggregates 1. Im Unterschied zur ersten Ausführungsform gemäß Fig. 2 wird hier das elastomere Polymer 19 in Form eines Hot-Melt-Bindemittels mittels einer Schlitzdüse 25 an den Kompaktierwalzen 22, 23 für die Spunbond-Basislage 2 aufgebracht. Die Aufbringung erfolgt vorzugsweise und im Ausführungsbeispiel auf die obere Kompaktierwalze 22 und die Streifen des Hot-Melt-Bindemittels werden mittels der Kompaktierwalzen 22, 23 auf die Spunbond-Basislage 2 aufgedrückt bzw. auflaminimiert. Ansonsten entspricht die Vorrichtung der Fig. 4 der Vorrichtung aus Fig. 2.

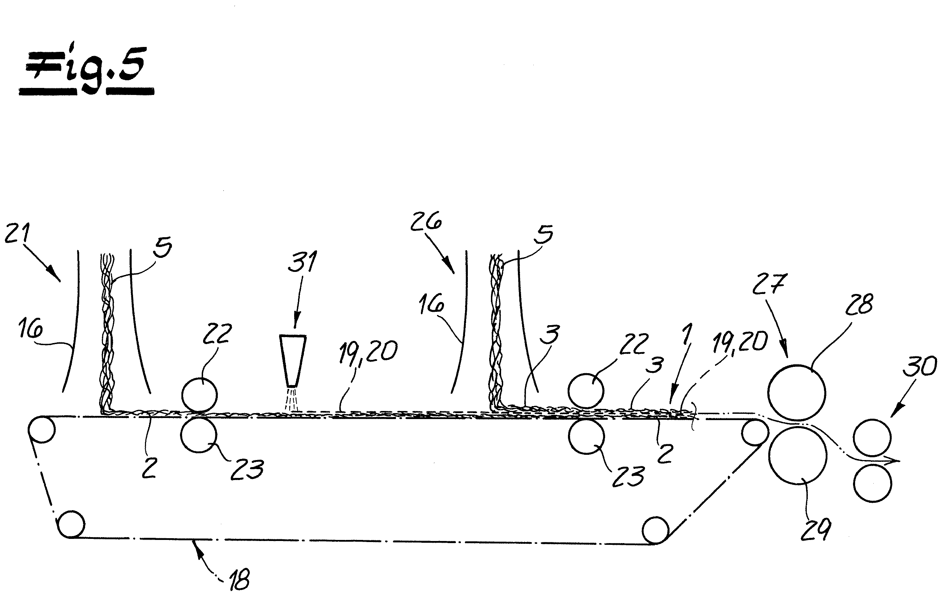

In der Fig. 5 ist eine dritte Ausführungsform einer Vorrichtung zur Durchführung des erfindungsgemäßen Verfahrens zur Inline-Herstellung eines Vliesaggregates 1 dargestellt. Hier wird das elastomere Polymer 19 in Form des Hot-Melt-Bindemittels im Anschluss an die Kompaktierung mit den Kompaktierwalzen 22, 23 mit Hilfe einer Sprühdüse 31 auf die Spunbond-Basislage 2 streifenförmig aufgebracht. Die Sprühdüse 31 ist dabei zweckmäßigerweise mit ausreichendem Abstand zu dem Ablagesiebband 18 positioniert. Statt der Sprühdüse 31 kann nach einer Ausführungsform auch eine Schlitzdüse 25 zur Aufbringung des elastomeren Polymers 19 in Maschinenrichtung hinter den Kompaktierwalzen 22, 23 vorgesehen sein. Die Schlitzdüse 25 wird dann zweckmäßigerweise mit geringerem Abstand zu dem Ablagesiebband 18 angeordnet als die Sprühdüse 31. - Ansonsten entspricht die Vorrichtung der Fig. 5 der in Fig. 2 dargestellten Vorrichtung.

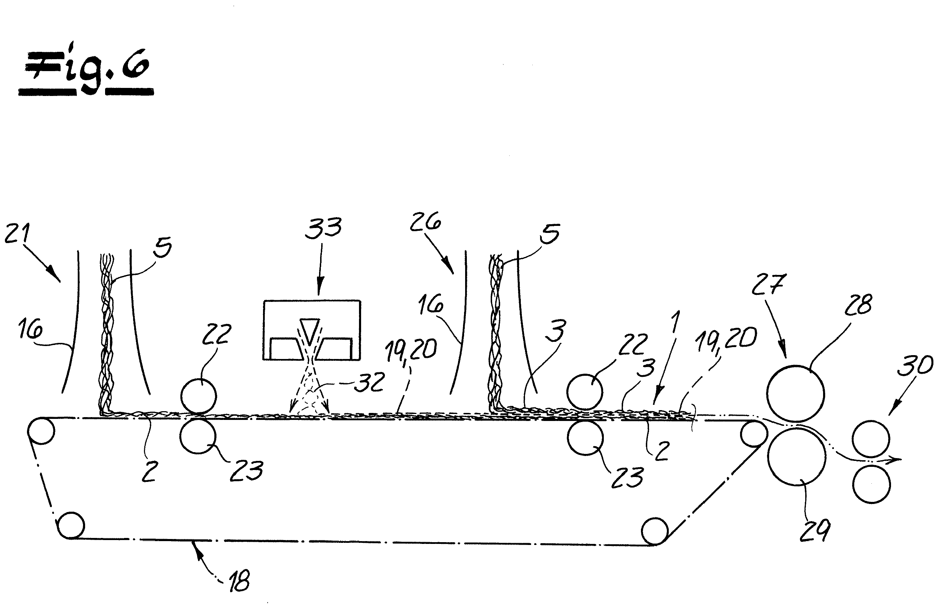

Schließlich zeigt die Fig. 6 eine vierte Ausführungsform einer Vorrichtung zur Durchführung des erfindungsgemäßen Verfahrens bei einer Inline-Herstellung des Vliesaggregates 1. Bei dieser Ausführungsform wird das elastomere Polymer 19 in Form von Meltblown-Filamenten 32 auf die Spunbond-Basislage 2 aufgebracht. Dazu ist zwischen der ersten Spunbond-Vorrichtung 21 und der zweiten Spunbond-Vorrichtung 26 eine Meltblown-Vorrichtung 33 über dem Ablagesiebband 18 angeordnet. Ansonsten entspricht die Vorrichtung der Fig. 6 der in Fig. 2 dargestellten Vorrichtung.

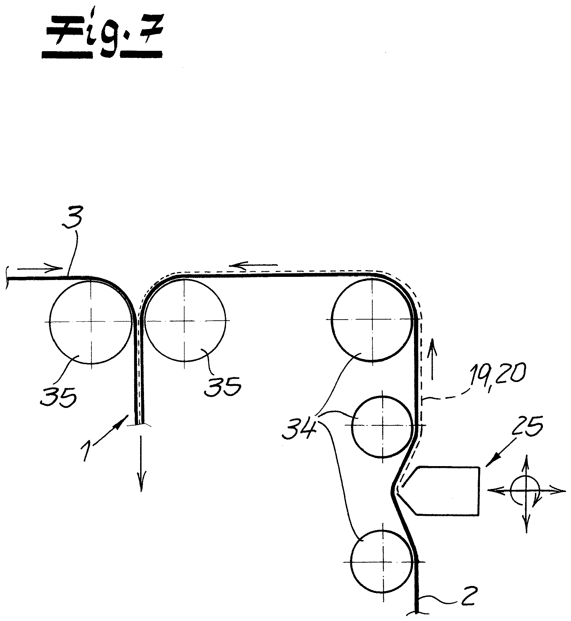

Die Figuren 7 bis 10 zeigen Ausführungsformen einer Vorrichtung zur Offline-Erzeugung eines erfindungsgemäßen Vliesaggregates 1. Dazu wird zweckmäßigerweise zunächst die Spunbond-Basislage 2 separat erzeugt und später bzw. zu einem späteren Zeitpunkt wird das elastomere Polymer 19 vorzugsweise streifenförmig auf die Spunbond-Basislage 2 aufgebracht.

Im Ausführungsbeispiel der Fig. 7 wird die Spunbond-Basislage 2 über zwei Führungswalzen 34 geführt und zwischen diesen Führungswalzen 34 erfolgt der Auftrag des elastomeren Polymers 19 in Form eines Hot-Melt-Bindemittels mit einer Schlitzdüse 25. Die Führungswalzen 34 mögen beispielsweise als Carbonfaserwalzen ausgebildet sein. Nach der vorzugsweise streifenförmigen Aufbringung des elastomeren Polymers 19 wird zweckmäßigerweise eine Decklage 3 auflaminiert, wozu im Ausführungsbeispiel 2 Laminierungswalzen 35 eingesetzt werden. Die Laminierung erfolgt beispielsweise mit einem Druck von 1 bis 2 bar.

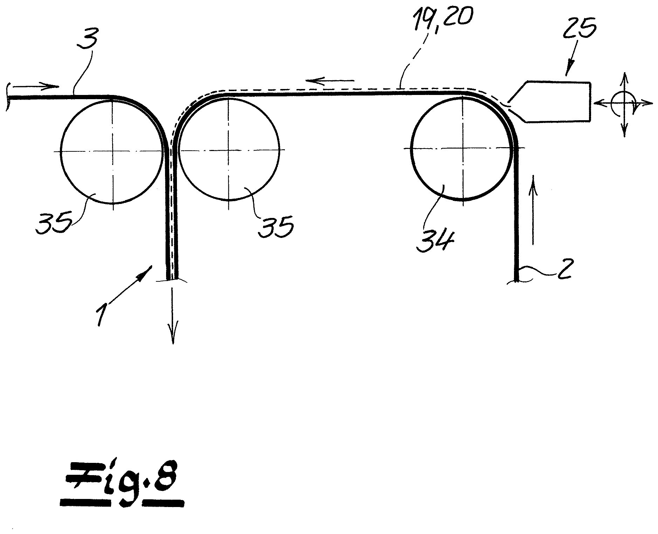

Die Fig. 8 zeigt eine zweite Ausführungsform einer Vorrichtung zur Offline-Erzeugung eines Vliesaggregates 1. Auch hier erfolgt der streifenförmige Auftrag des elastomeren Polymers 19 in Form eines Hot-Melt-Bindemittels mit Hilfe einer Schlitzdüse 25. Der Auftrag erfolgt hier an einer Führungswalze 34 und im Anschluss daran wird mit Hilfe der Laminierungswalzen 35 die Decklage 3 auflaminiert und zwar bevorzugt bei einem Druck von 1 bis 2 bar.

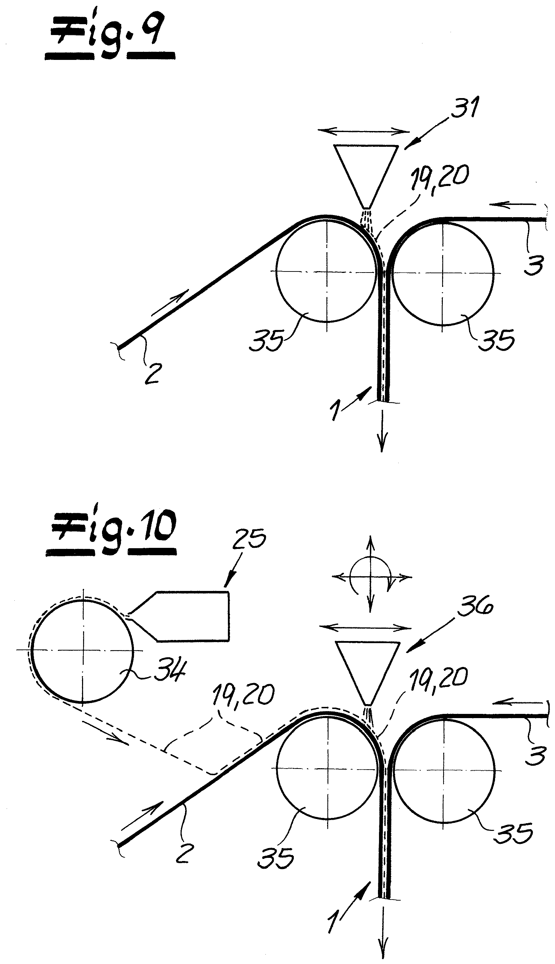

Bei der Ausführungsform der Fig. 9 wird im Zuge der Offline-Erzeugung des Vliesaggregates 1 die bereits fertige Spunbond-Basislage 2 den Laminierungswalzen 35 zugeführt und kurz vor der Auflaminierung der Decklage 3 wird hier das elastomere Polymer 19 mit Hilfe einer Sprühdüse 31 auf die Spunbond-Basislage 2 aufgebracht. Anschließend erfolgt die Auflaminierung der Decklage 3 mit den Laminierungswalzen 35 zweckmäßigerweise bei einem Druck von 1 bis 2 bar.

Schließlich zeigt die Fig. 10 eine vierte Ausführungsform einer Vorrichtung zur Durchführung des erfindungsgemäßen Verfahrens bei einer Offline-Erzeugung des Vliesaggregates 1. Das elastomere Polymer 19 wird hier an einer Führungswalze 34 in Form eines Hot-Melt-Bindemittels mit Hilfe einer Schlitzdüse 25 aufgebracht und die Streifen aus dem elastomeren Polymer 19 werden anschließend auf die bereits fertige Spunbond-Basislage 2 auflaminiert. Zur Auflaminierung der Decklage 3 wird hier zusätzlich ein Kleber eingesetzt, der nach dem Auftragen des elastomeren Polymers 19 auf das Vliesaggregat 1 aufgebracht wird und zwar vorzugsweise und im Ausführungsbeispiel als Sprühkleber mit einer Sprühdüse 36. Daraufhin erfolgt mit Hilfe der Laminierungswalzen 35 die Auflaminierung der Decklage 3 und zwar zweckmäßigerweise bei einem Laminierungsdruck von 1 bis 2 bar.

Die Ausführungsformen nach den Figuren 7 bis 10 wurden oben als Ausführungsformen für die Offline-Herstellung erläutert. Grundsätzlich können diese Ausführungsformen bzw. die entsprechenden Vorrichtungen aber auch im Rahmen eines Inline-Verfahrens eingesetzt werden.

## Patentansprüche

1. Verfahren zur Herstellung eines Vliesaggregates (1), wobei zumindest ein Spunbond-Vlies als Spunbond-Basislage (2) erzeugt wird und wobei zumindest ein elastomeres Polymer (19) auf zumindest eine Seite bzw. auf die Oberseite der Spunbond-Basislage (2) aufgebracht wird, wobei die Spunbond-Basislage (2) gekräuselte Endlosfilamente (5) aufweist und vorzugsweise zu mindestens 50 Gew.-% aus gekräuselten Endlosfilamenten (5) besteht, wobei das elastomere Polymer (19) lediglich bereichsweise und zwar in zumindest zwei, vorzugsweise in zumindest drei voneinander beabstandeten Auftragsbereichen auf zumindest eine Seite bzw. auf die Oberseite der Spunbond-Basislage (2) aufgebracht wird und wobei das elastomere Polymer (19) in Form eines Hot-Melt-Bindemittels spannungsfrei bzw. im Wesentlichen spannungsfrei auf eine Seite der Spunbond-Basislage (2) aufgebracht wird.

2. Verfahren nach Anspruch 1, wobei das elastomere Polymer (19) bzw. das Hot-Melt-Bindemittel mittels zumindest einer Schlitzdüse (25) und/oder mittels zumindest einer Sprühdüse (31) auf eine Seite der Spunbond-Basislage (2) aufgebracht wird.

3. Verfahren nach einem der Ansprüche 1 oder 2, wobei das elastomere Polymer (19) bzw. das Hot-Melt-Bindemittel unmittelbar und ohne Zwischenschaltung einer weiteren Schicht, insbesondere ohne Zwischenschaltung eines Films bzw. Kunststofffilms auf eine Seite der Spunbond-Basislage (2) aufgebracht wird.

4. Verfahren nach einem der Ansprüche 1 bis 3, wobei das elastomere Polymer (19) bzw. das Hot-Melt-Bindemittel in Form von Streifen (20) oder Raupen auf eine Seite der Spunbond-Basislage (2) aufgebracht wird, wobei die Längsrichtung der Streifen (20) oder Raupen vorzugsweise in Maschinenrichtung (MD) orientiert ist bzw. im Wesentlichen orientiert ist.

5. Verfahren nach Anspruch 4, wobei die Dicke D der Streifen (20) oder Raupen 0,1 bis 6 mm, vorzugsweise 0,15 bis 4 mm und bevorzugt 0,2 bis 2 mm beträgt.

6. Verfahren nach einem der Ansprüche 4 oder 5, wobei die Breite B der Streifen (20) oder Raupen quer zur Maschinenrichtung (in CD-Richtung) 0,25 bis 6 mm, vorzugsweise 0,5 bis 4 mm und bevorzugt 1 bis 3 mm beträgt.

7. Verfahren nach einem der Ansprüche 1 bis 6, wobei das elastomere Polymer (19) bzw. das Hot-Melt-Bindemittel maximal 70 %, vorzugsweise maximal 50 % und bevorzugt maximal 45 % sowie sehr bevorzugt maximal 40 % der Fläche einer Seite der Spunbond-Basislage (2) bedeckt.

8. Verfahren nach einem der Ansprüche 1 bis 7, wobei das elastomere Polymer (19) bzw. das Hot-Melt-Bindemittel zumindest einen thermoplastischen Kautschuk, insbesondere zumindest einen thermoplastischen Synthese-Kautschuk aufweist und wobei das elastomere Polymer (19) bzw. das Hot-Melt-Bindemittel vorzugsweise zu mindestens 50 Gew.-% aus dem zumindest einen thermoplastischen Kautschuk bzw. Synthese-Kautschuk besteht.

9. Verfahren nach einem der Ansprüche 1 bis 8, wobei das Vliesaggregat (1) als Laminat mit zumindest einer auf das elastomere Polymer (19) bzw. auf das Hot-Melt-Bindemittel aufgebrachten Decklage (3) ausgebildet wird, wobei die Decklage (3) vorzugsweise zumindest 80 %, bevorzugt zumindest 95 % der Fläche der darunter angeordneten Spunbond-Basislage (2) bedeckt.

10. Verfahren nach Anspruch 9, wobei die Decklage (3) ein Vliesstoff ist, vorzugsweise ein Spunbond-Vlies und/oder ein Meltblown-Vlies ist und wobei vorzugsweise der Vliesstoff unmittelbar auf das elastomere Polymer (19) bzw. auf das Hot-Melt-Bindemittel aufgebracht wird und insbesondere ohne Zwischenschaltung eines Films bzw. Kunststofffilms aufgebracht wird.

11. Verfahren nach einem der Ansprüche 1 bis 10, wobei das Vliesaggregat (1) bzw. das Laminat punktuell verfestigt bzw. gebondet wird, wobei diese Verfestigung vorzugsweise mittels zumindest eines Kalanders (27) durchgeführt wird und wobei der Kalander (27) bevorzugt eine Prägefläche bzw. einen Pressflächenanteil von 4 bis 25 %, insbesondere von 5 bis 20 % aufweist.

12. Verfahren nach einem der Ansprüche 1 bis 11, wobei das Vliesaggregat (1) bzw. das Laminat gedehnt wird, vorzugsweise mittels Aktivierungswalzen (30) gedehnt wird und zweckmäßigerweise im Anschluss an die punktuelle Verfestigung unter teilweise Aufbrechen der Verfestigungspunkte bzw. Bondingpunkte gedehnt bzw. aktiviert wird.

13. Vliesaggregat, hergestellt mit einem Verfahren nach einem der Ansprüche 1 bis 12, wobei ein Spunbond-Vlies mit bzw. aus gekräuselten Endlosfilamenten (5) als Spunbond-Basislage (2) vorgesehen ist und wobei ein elastomeres Polymer (19) lediglich bereichsweise auf zumindest eine Seite bzw. auf die Oberseite der Spunbond-Basislage (2) aufgebracht ist und wobei das elastische Polymer (19) in zumindest zwei, vorzugsweise in zumindest drei voneinander beabstandeten Auftragsbereichen auf der Oberseite der Spunbond-Basislage (2) aufgebracht ist.

## Claims

1. Method for producing a non-woven aggregate (1), wherein at least one spunbond non-woven is produced as a spunbond base layer (2) and wherein at least one elastomeric polymer (19) is applied to at least one side or to the top of the spunbond base layer (2), wherein the spunbond base layer (2) has crimped continuous filaments (5) and preferably consists of at least 50% by weight of crimped continuous filaments (5), wherein the elastomeric polymer (19) is only applied in some areas and specifically in at least two, preferably in at least three spaced-apart application areas on at least one side or on the top of the spunbond base layer (2) and wherein the elastomeric polymer (19) is applied in the form of a hot-melt binding agent, tension-free or substantially tension-free, to one side of the spunbond base layer (2) .

2. Method according to one of Claim 1, wherein the elastomeric polymer (19) or the hot-melt binding agent is applied to one side of the spunbond base layer (2) by means of at least one slot nozzle (25) and/or by means of at least one spray nozzle (31).

3. Method according to one of Claims 1 or 2, wherein the elastomeric polymer (19) or the hot-melt binding agent is applied directly and without the interposition of a further layer, in particular without the interposition of a film or plastic film to one side of the spunbond base layer (2).

4. Method according to one of Claims 1 to 3, wherein the elastomeric polymer (19) or the hot-melt binding agent is applied in the form of strips (20) or beads to one side of the spunbond base layer (2), wherein the longitudinal direction of the strips (20) or beads is preferably oriented or substantially oriented in the machine direction (MD).

5. Method according to Claim 4, wherein the thickness D of the strips (20) or beads is 0.1 to 6 mm, preferably 0.15 to 4 mm and preferably 0.2 to 2 mm.

6. Method according to one of Claims 4 or 5, wherein the width B of the strips (20) or beads transverse to the machine direction (in the CD direction) is 0.25 to 6 mm, preferably 0.5 to 4 mm and preferably 1 to 3 mm.

7. Method according to one of Claims 1 to 6, wherein the elastomeric polymer (19) or the hot-melt binding agent covers a maximum of 70%, preferably a maximum of 50% and preferably a maximum of 45% and very preferably a maximum of 40% of the area of one side of the spunbond base layer (2).

8. Method according to one of Claims 1 to 7, wherein the elastomeric polymer (19) or the hot-melt binding agent comprises at least one thermoplastic rubber, in particular at least one thermoplastic synthetic rubber, and wherein the elastomeric polymer (19) or the hot-melt binding agent preferably consists of at least 50% by weight of the at least one thermoplastic rubber or synthetic rubber.

9. Method according to one of Claims 1 to 8, wherein the non-woven aggregate (1) is formed as a laminate with at least one cover layer (3) applied to the elastomeric polymer (19) or to the hot-melt binding agent, wherein the cover layer (3) preferably covers at least 80%, preferably at least 95% of the area of the spunbond base layer (2) arranged thereunder.

10. Method according to Claim 9, wherein the cover layer (3) is a non-woven material, preferably a spunbond non-woven and/or a meltblown non-woven, and wherein preferably the non-woven material is applied directly to the elastomeric polymer (19) or to the hot-melt binding agent and in particular is applied without the interposition of a film or plastic film.

11. Method according to one of Claims 1 to 10, wherein the non-woven aggregate (1) or the laminate is consolidated or bonded selectively, wherein this consolidation is preferably carried out by means of at least one calender (27) and wherein the calender (27) preferably has an embossing surface or a pressing area proportion of 4 to 25%, in particular 5 to 20%.

12. Method according to one of Claims 1 to 11, wherein the non-woven aggregate (1) or the laminate is stretched, preferably is stretched by means of activation rollers (30) and expediently is stretched or activated following the selective consolidation with partial breaking of the consolidation points or bonding points.

13. Non-woven aggregate, produced using a method according to one of Claims 1 to 12, wherein a spunbond non-woven with or made of crimped continuous filaments (5) is provided as the spunbond base layer (2) and wherein an elastomeric polymer (19) is applied only in some areas to at least one side or to the top of the spunbond base layer (2) and the elastic polymer (19) is applied in at least two, preferably in at least three spaced apart application areas on the top of the spunbond base layer (2).

## Revendications

1. Procédé, destiné à fabriquer un ensemble non-tissé (1), au moins un non-tissé obtenu par filage-nappage étant créé en tant que couche de base (2) obtenue par filage-nappage et au moins un polymère (19) élastomère étant appliqué sur au moins une face ou sur la face supérieure de la couche de base (2) obtenue par filage-nappage, la couche de base (2) obtenue par filage-nappage comportant des filaments continus (5) frisés et étant constituée de préférence à raison d'au moins 50 % en poids de filaments continus (5) frisés, le polymère (19) élastomère étant appliqué uniquement par zones, à savoir dans au moins deux, de préférence dans au moins trois zones d'applications écartées les unes des autres sur au moins une face ou sur la face supérieure de la couche de base (2) obtenue par filage-nappage et le polymère (19) élastomère étant appliqué sous la forme d'un liant thermofusible sans tension ou sensiblement sans tension sur une face de la couche de base (2) obtenue par filage-nappage.

2. Procédé selon la revendication 1, le polymère (19) élastomère ou le liant thermofusible étant appliqué au moyen d'au moins une filière à fente (25) et / ou au moyen d'au moins un buse de pulvérisation (31) sur une face de la couche de base (2) obtenue par filage-nappage.

3. Procédé selon l'une quelconque des revendications 1 ou 2, le polymère (19) élastomère ou le liant thermofusible étant appliqué direction et sans interposition d'une couche supplémentaire, notamment sans interposition d'un film ou d'un film de matière plastique sur une face de la couche de base (2) obtenue par filage-nappage.

4. Procédé selon l'une quelconque des revendications 1 à 3, le polymère (19) élastomère ou le liant thermofusible étant appliqué sous la forme de bandes (20) ou de chenilles sur une face de la couche de base (2) obtenue par filage-nappage, la direction longitudinale des bandes (20) ou des chenilles étant orientée ou sensiblement orientée de préférence dans la direction (MD) de la machine.

5. Procédé selon la revendication 4, l'épaisseur D des bandes (20) ou des chenilles étant de 0,1 à 6 mm, de préférence de 0,15 à 4 mm et de manière préférentielle, de 0,2 à 2 mm.

6. Procédé selon l'une quelconque des revendications 4 ou 5, la largeur B des bandes (20) ou des chenilles à la transversale de la direction de la machine (dans la direction CD) étant de 0,25 à 6 mm, de préférence de 0,5 à 4 mm et de manière préférentielle, de 1 à 3 mm.

7. Procédé selon l'une quelconque des revendications 1 à 6, le polymère (19) élastomère ou le liant thermofusible recouvrant au maximum 70 %, de préférence au maximum 50 % et de manière préférentielle, au maximum 45 %, ainsi que de manière très préférentielle, au maximum 40 % de la surface d'une face de la couche de base (2) obtenue par filage-nappage.

8. Procédé selon l'une quelconque des revendications 1 à 7, le polymère (19) élastomère ou le liant thermofusible comportant au moins un caoutchouc thermoplastique, notamment au moins un caoutchouc thermoplastique de synthèse et le polymère (19) élastomère ou le liant thermofusible étant constitué de préférence à raison d'au moins 50 % en poids de l'au moins un caoutchouc thermoplastique ou caoutchouc de synthèse.

9. Procédé selon l'une quelconque des revendications 1 à 8, l'ensemble non-tissé (1) étant conçu sous la forme d'un stratifié comprenant au moins une couche de couverture (3) appliquée sur le polymère (19) élastomère ou sur le liant thermofusible, la couche de couverture (3) recouvrant de préférence au moins 80 %, de manière préférentielle au moins 95 % de la surface de la couche de base (2) obtenue par filage-nappage sous-jacente.

10. Procédé selon la revendication 9, la couche de couverture (3) étant un non-tissé, de préférence un non-tissé obtenu par filage-nappage et / ou un non-tissé soufflé en fusion et de préférence le non-tissé étant appliqué directement sur le polymère (19) élastomère ou sur le liant thermofusible et notamment sans interposition d'un film ou d'un film en matière plastique.

11. Procédé selon l'une quelconque des revendications 1 à 10, l'ensemble non-tissé (1) ou le stratifié étant ponctuellement consolidé ou lié, ladite consolidation étant réalisée de préférence au moyen d'au moins une calandre (27) et la calandre (27) comportant de manière préférentielle une surface de gaufrage ou une proportion de surface de pressage de 4 à 25 %, notamment de 5 à 20 %.

12. Procédé selon l'une quelconque des revendications 1 à 11, l'ensemble non-tissé (1) ou le stratifié étant étiré, de préférence étant étiré au moyen de rouleaux d'activation (30) et opportunément étant étiré ou activé à la suite de la consolidation ponctuelle, sous rupture partielle des points de consolidation ou des points de liaison.

13. Ensemble non-tissé, fabriqué à l'aide d'un procédé selon l'une quelconque des revendications 1 à 12, un non-tissé obtenu par filage-nappage comprenant des ou constitué de filaments continus (5) frisés étant prévu en tant que couche de base (2) obtenue par filage-nappage et un polymère (19) élastomère étant appliqué uniquement par zones sur au moins une face ou sur la face supérieure de la couche de base (2) obtenue par filage-nappage et le polymère (19) élastique étant appliqué dans au moins deux, de préférence dans au moins trois zones d'application écartées les unes des autres sur la face supérieure de la couche de base (2) obtenue par filage-nappage.
